(19) Europäisches Patentamt / European Patent Office / Office européen des brevets

(11) **EP 2 104 853 B1**

(12) **EUROPÄISCHE PATENTSCHRIFT**

(45) Veröffentlichungstag und Bekanntmachung des Hinweises auf die Patenterteilung:
**19.05.2010   Patentblatt 2010/20**

(21) Anmeldenummer: **08802641.4**

(22) Anmeldetag: **26.09.2008**

(51) Int Cl.:
*G01N 30/86* (2006.01)   *G06F 17/50* (2006.01)
*G06K 9/00* (2006.01)   *G01N 30/00* (2006.01)

(86) Internationale Anmeldenummer:
**PCT/EP2008/008184**

(87) Internationale Veröffentlichungsnummer:
**WO 2009/046887 (16.04.2009 Gazette 2009/16)**

(54) **VERFAHREN UND VORRICHTUNG ZUR OPTIMIERUNG DER TRENNMETHODE FÜR EIN GEGEBENES PROBENSYSTEM MITTELS ASYMMETRISCHER FELDFLUSSFRAKTIONIERUNG**

METHOD AND DEVICE FOR OPTIMIZING THE SEPARATION METHOD FOR A GIVEN SAMPLE SYSTEM BY MEANS OF ASYMMETRICAL FIELD FLOW FRACTIONATION

PROCÉDÉ ET DISPOSITIF POUR OPTIMISER LE PROCÉDÉ DE SÉPARATION D'UN SYSTÈME D'ÉCHANTILLONS DONNÉ AU MOYEN D'UN FRACTIONNEMENT PAR COUPLAGE FLUX-FORCE DANS UNE CELLULE ASYMÉTRIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **05.10.2007   DE 102007047695**

(43) Veröffentlichungstag der Anmeldung:
**30.09.2009   Patentblatt 2009/40**

(73) Patentinhaber: **Wyatt Technology Europe Gmbh
56307 Dernbach (DE)**

(72) Erfinder:
• **JOHANN, Christoph
  57614 Woldert (DE)**
• **SCHUCH, Horst
  69126 Heidelberg (DE)**
• **KALTENBORN, Alge
  56564 Neuwied (DE)**
• **SCHUMACHER, Matthias
  52056 Aachen (DE)**

(74) Vertreter: **Podszus, Burghart
  Patentanwalt
  Postfach 1129
  79216 Staufen (DE)**

(56) Entgegenhaltungen:
• **JOHANN C ET AL: "New Tools for Optimization of Channel Geometry and method Development in Assymetrical Flow-Field Fractionation" AUSZUG ABSTRACT BOOK FFF 2007, [Online] 12. August 2007 (2007-08-12), XP002508620 Gefunden im Internet: URL:web.utah.edu> [gefunden am 2008-12-12] -& ANONYMOUS: "13th International Symposium on Field- and Flow- Based Separations (FFF 2007)"[Online] 12. August 2007 (2007-08-12), Seiten 1-2, XP002508621 Gefunden im Internet: URL:http://web.archive.org/web/20070812080 558rn_ 1/web.utah.edu/fff2007/> [gefunden am 2008-12-12]**
• **WAHLUND K-G ET AL: "PROPERTIES OF AN ASYMMETRICAL FLOW FIELD-FLOW FRACTIONATION CHANNELHAVING ONE PERMEABLE WALL" ANALYTICAL CHEMISTRY, AMERICAN CHEMICAL SOCIETY. COLUMBUS, US, Bd. 59, 1. Mai 1987 (1987-05-01), Seiten 1332-1339, XP000676198 ISSN: 0003-2700 in der Anmeldung erwähnt**
• **LITZEN A: "SEPARATION SPEED, RETENTION, AND DISPERSION IN ASYMMETRICAL FLOW FIELD-FLOW FRACTIONATION AS FUNCTIONS OF CHANNEL DIMENSIONS AND FLOW RATES" ANALYTICAL BIOCHEMISTRY, ACADEMIC PRESS INC. NEW YORK, Bd. 65, Nr. 4, 1. Januar 1993 (1993-01-01), Seiten 461-470, XP002069236 ISSN: 0003-2697 in der Anmeldung erwähnt**

- **SUSLOV S A; ROBERTS A J: "Modeling of Sample Dynamics in Rectangular Asymmetrical Flow Field-Flow Fractionation Channels" ANALYTICAL CHEMISTRY, Bd. 72, 12. August 2000 (2000-08-12), Seiten 4331-4345, XP002508622 AMERICAN CHEMICAL SOCIETY**

- **MASUDO ET AL: "Low-capacity channel designed for particle separation with controlled electric fields and evaluation of involved forces" JOURNAL OF CHROMATOGRAPHY, ELSEVIER SCIENCE PUBLISHERS B.V. AMSTERDAM, NL, Bd. 1106, Nr. 1-2, 17. Februar 2006 (2006-02-17), Seiten 196-204, XP005268593 ISSN: 0021-9673**

**Beschreibung**

Die Erfindung betrifft ein Verfahren zur Optimierung der Trennmethode für ein gegebenes Probensystem mit mindestens einem zu analysierenden Probenbestandteil mittels asymmetrischer Feldflussfraktionierung (AF4), wobei das Auftrennen des Probensystems mit Hilfe eines Trennkanales erfolgt, der einen sich in Richtung der Längsachse des Kanales zum Flussauslass hin erstreckenden verjüngenden Verlauf aufweist. Die Erfindung bezieht sich ferner auf eine Vorrichtung zur Durchführung dieses Verfahrens.

Bei der asymmetrischen Feldflussfraktionierung handelt es sich um eine der Flüssigkeitschromatographie ähnliche Trenntechnik, mit der unterschiedliche Makromoleküle und sonstige Partikel (im folgenden auch als zu analysierende Probenbestandteile bezeichnet) aus den Bereichen Polymerchemie, Pharmazie, Biochemie etc. charakterisiert werden können. Dabei wird die Probe gelöst oder suspendiert in einen Trennkanal eingebracht, in dem sich aufgrund seiner geringen Höhe von beispielsweise 300 $\mu$m ein laminares Strömungsprofil ausbildet, in dem die Fließgeschwindigkeit in der Mitte maximal ist und an den Rändern gegen Null geht.

Die Unterseite des Trennkanales besteht aus einer Fritte, die mit einer Membran (Akkumulationswand) bedeckt ist. Ein Teil des Kanalflusses tritt nach unten aus und erzeugt so einen Querfluss, der in der ganzen Fläche des Kanales ein definiertes Kraftfeld senkrecht zur Transportrichtung erzeugt. Durch die Trennkraft werden die zu analysierenden Probenbestandteile in Richtung auf die Akkumulationswand gedrückt. Aufgrund der unterschiedlichen Größen und der damit verbundenen unterschiedlichen Diffusionskoeffizienten diffundieren kleinere Partikel weiter in den Kanal zurück als größere und gelangen so in schnellere Strömungslinien des parabolischen Trägerstromes, so daß kleinere Partikel daher schneller aus dem Kanal eluiert werden als größere Partikel.

Die Retentionszeiten $t_r$, d.h. die Zeit, welche die zu analysierenden Probenbestandteile zum Durchwandern des Trennkanales benötigen, wird bei der asymmetrischen Feldflussfraktionierung wesentlich durch die Flüsse in Längs- und Querrichtung sowie die Geometrien des Trennkanales bestimmt und läßt sich mittels der Beziehung:

$$t_r \approx \tfrac{1}{2}\,(h^2/kT)\pi\,\eta d\,(V_c/V_f)$$

abschätzen.

Dabei ist h die Höhe des Kanales, $kT$ die thermische Energie, $\eta$ die Viskosität des Lösungsmittels, $d$ der von dem Diffusionskoeffizienten abhängige hydrodynamische Durchmesser (Stokesdurchmesser) der Partikel und $V_c/V_f$ das Verhältnis von Quer- zu Kanalfluss.

Die Retentionszeit ist also proportional zum Produkt aus der Teilchengröße und dem Verhältnis Quer- zu Kanalfluss, so daß das Elutionsverhalten der Partikel über die Flüsse einstellbar ist.

Um die Meßzeit bei polydispersen Proben mit großen Molmassendifferenzen möglichst gering zu halten ist es bekannt, den Querfluss nicht konstant zu halten, sondern mit zunehmender Zeit beispielsweise linear oder parabelförmig zu reduzieren. Dadurch vermindert man einerseits die Peakverbreiterung bei zunehmender Retentionszeit und verkürzt andererseits die Meßdauer deutlich.

Mit der asymmetrischen Feldflussfraktionierung kann zwar eine Vielzahl von verschiedenen Probensystemen analysiert werden, doch wirft jedes Probensystem in der Regel spezielle Fragestellungen und Probleme auf, so daß für unterschiedliche Probensysteme zur Erzielung einer optimalen Trennmethode unterschiedliche Trennkanäle und/oder unterschiedliche Prozessparameter erforderlich sind.

Aus der vorstehend erwähnten Gleichung für die Retentionszeit $t_r$ kann zwar die Retentionszeit für einen bestimmten Stokesdurchmesser grob abgeschätzt werden, doch sind für einen normalen Anwender die notwendigen Daten nicht in der Form greifbar, in der sie in die Gleichung eingesetzt werden müssen. Außerdem sind Bandenverbreiterungen (Verbreiterung der Peaks des jeweils gemessenen Fraktogrammes) nicht einfach abzuschätzen und Verdünnungseffekte am Auslass des Kanales werden durch die vorstehend erwähnte Gleichung nicht berücksichtigt. Schließlich kann die Wirkung einer Veränderung der Höhe des Trennkanales auf die Lage und Höhe der Peaks in den Fraktogrammen nur schwer abgeschätzt werden.

Um daher eine optimale Trennmethode für ein neues Probensystem zu ermitteln, ist es in der Praxis üblich, zeitaufwendige Testmessungen durchzuführen, bei denen alle für das jeweilige Optimierungsziel (z.B.: vollständige Trennung der Peaks für eine Mischung aus zwei zu analysierenden Probenbestandteilen) relevanten Parameter, wie Injektionszeit, Fokussierungszeit, Querfluss etc., systematisch variiert und die Veränderungen der gemessenen Fraktogramme beobachtet werden, um dann mit denjenigen Parametern die Messungen an entsprechenden neuen Proben vorzunehmen, die bei den Versuchsmessungen zu einem optimalen Ergebnis geführt haben.

Aus dem Artikel von: Kirkland, J.J.; u.a..: "Asymmetric-channel flow field-flow fractionation with exponential force-field programming" in: Journal of Chromatography 593 (1992), S. 339-355, ist es ferner bekannt, die Retentionszeit in Abhängigkeit von dem Diffusionskoeffizienten eines Probenbestandteiles für einen trapezförmigen Kanal zu bestimmen, wenn der Querstrom einen exponentiellen Verlauf aufweist. Die sich für diesen Fall ergebende Gleichung kann dann mit Hilfe eines iterativen Verfahrens durch einen Computer ausgewertet werden.

Nachteilig bei diesem bekannten Verfahren ist unter anderem, daß lediglich die Lage des für den jeweiligen Probenbestandteil charakteristischen Peaks, nicht hingegen die Peakbreite, ermittelt wird. Für eine Simulation ist aber gerade die Trenngüte sich überlagernder Peaks und damit die Antwort auf die Frage, ob zwei Probenbestandteile unter gegebenen Bedingungen getrennt werden können, von herausragender Bedeutung.

Der Erfindung liegt daher die Aufgabe zugrunde, ein Verfahren zur Optimierung der Trennmethode für ein gegebenes Probensystem anzugeben, mittels dessen für ein vorgegebenes Optimierungsziel die optimalen geometrischen Parameter des Trennkanales und/oder die optimalen Prozessparameter zur Durchführung des Trennvorganges auf einfachere Weise ermittelbar sind als dieses mit bekannten Verfahren möglich ist. Die Erfindung offenbart ferner eine Vorrichtung zur Durchführung des Verfahrens.

Diese Aufgabe wird erfindungsgemäß hinsichtlich des Verfahrens durch die Merkmale des Anspruchs 1 und hinsichtlich der Vorrichtung durch die Merkmale des Anspruchs 8 gelöst. Weitere, besonders vorteilhafte Ausgestaltungen der Erfindung offenbaren die Unteransprüche.

Die Erfindung beruht im wesentlichen auf dem Gedanken, zunächst lediglich mit Hilfe einer Testmessung mit einem bereits vorhandenen Trennkanal ein Fraktogramm für das Probensystem mit den zu analysierenden Probenbestandteilen durchzuführen. Aus diesem Fraktogramm werden dann die Retentionszeiten beispielsweise für zwei Peaks entnommen, die zu zwei zu analysierenden Probenbestandteilen unterschiedlicher Partikelgröße gehören. Anschließend wird die Retentionszeit des ersten Peaks zusammen mit den vorgegebenen geometrischen Parametern des Trennkanales und den vorgegebenen Prozessparametem, welche zu dem gemessenen Fraktogramm geführt haben, in einen Rechner eingegeben, welcher aus diesen Parametern mittels eines Simulationsprogrammes den Diffusionskoeffizienten berechnet, der diesem zu analysierenden Probenbestandteil zugeordnet ist. Schließlich wird mittels des Simulationsprogrammes ein dem gemessenen Fraktogramm entsprechendes (berechnetes) Fraktogramm auf einem Bildschirm dargestellt.

Unter Verwendung der gleichen Parameter wird anschließend die Retentionszeit des zweiten Peaks in den Computer eingegeben, so daß das Simulationsprogramm in einem zweiten Durchlauf ein zweites Fraktogramm berechnet, welches dem ersten Fraktogramm auf dem Bildschirm überlagert wird, so daß ein Betrachter lediglich ein Fraktogramm mit den beiden Peaks auf dem Bildschirm sieht.

Um das vorgegebene Optimierungsziel zu erreichen, werden dann alle relevanten Parameter (Höhe des Trennkanales, zeitlicher Verlauf des Querflusses etc.) variiert und die Auswirkung dieser Veränderungen direkt anhand der auf dem Bildschirm dargestellten Fraktogramme verfolgt. Sobald sich auf dem Bildschirm des Computers ein optimales Fraktogramm ergibt, werden die in den Computer hierfür eingegebenen Parameter für die tatsächlich durchzuführenden Messungen verwendet.

Das erfindungsgemäße Verfahren weist den großen Vorteil auf, daß eine Optimierung der Trennmethode im Hinblick auf das jeweilige Optimierungsziel innerhalb von Minuten möglich ist, während für eine Optimierung mit Hilfe von Testmessungen häufig mehrere Tage benötigt werden.

Wesentlich für das erfindungsgemäße Verfahren ist die Verwendung eines neu entwickelten Simulationsprogrammes, welches es ermöglicht, ein gemessenes Fraktogramm unter Vorgabe der auch bei der Messung verwendeten Parameter auf einen Bildschirm zu übertragen und anschließend den Einfluß von Änderungen der Parameter, ohne zusätzliche Messungen, bei dem auf dem Bildschirm dargestellten (berechneten) Fraktogramm zu verfolgen.

Nachfolgend wird daher auf das für das erfindungsgemäße Verfahren verwendete Simulationsprogramm näher eingegangen. Dabei wurde zur Ableitung der Gleichungen des Simulationsprogrammes folgende Literatur herangezogen:

[Caldwell:1988] Caldwell, K.D. et al. J.Appl.Polym.Sci. 1988, 36, 703
[Giddings:1968] Giddings, J.C. J.Chem.Phys. 1968, 49, 81
[Giddings:1975] Giddings, J.C. et al. E.Sep.Sci. 1975, 10,447
[Giddings:1986] Giddings, J.C.: Sep.Sci.Technol., 1986, 21, 831
[Litzen:1991] Litzen, A.; Wahlund, K.G. Anal.Chem. 1991, 63, 1001
[Litzen: 1993] Litzen, A.; Anal.Chem. 1993, 65,461
[Martin: 1981] Martin, M.; Giddings, J.C. J.Phys.Chem. 1981, 85 727
[Moon:1993] Moon, M.H; Giddings, J.C. J.Pharm. Biomed. Anal. 1993, 11, 911
[Wahlund:1987] Wahlund, K.G.; Giddings, J.C. Anal. Chem. 1987, 59, 1332
[Wahlund:2005] Wahlund, K.G.; persönliche Information, 2005

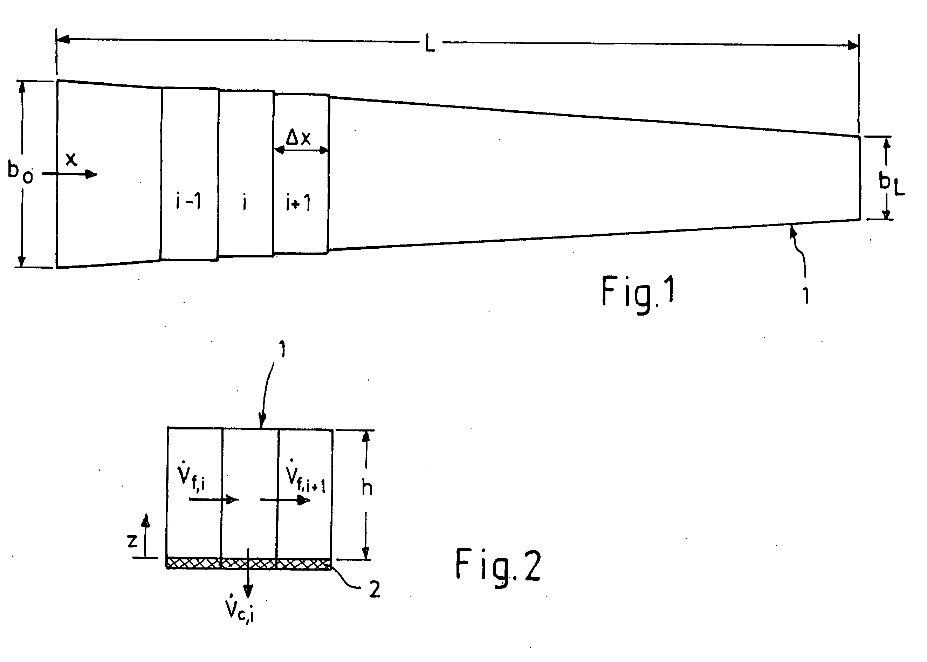

Der Algorithmus basiert auf der Idee, dass ein sich verjüngender, im vorliegenden Fall trapezförmiger Trennkanal 1 der AF4-Zelle durch $N$ equidistante, rechtwinklige Volumenelemente mit zum Detektorauslass hin abnehmender Breite $b$ angenähert werden kann (vgl. auch die Fig.1 und 2, die einen entsprechenden Kanal 1 in Draufsicht (Fig.1) und im Querschnitt (Fig.2) wiedergeben). Innerhalb dieser diskreten Segmente der Länge $\Delta x$ können konstante Bedingungen hinsichtlich der Strömung sowie die Gültigkeit der Modellgleichungen der AF4 in rechtwinkligen Kanälen angenommen werden. Aufgrund dieser Diskretisierung ist es möglich, die veränderten Bedingungen für die Bewegung der Probenbestandteile aufgrund des abnehmenden Kanaldruckes zu berücksichtigen, was in dieser Form in der Literatur bisher auch nicht beschrieben ist. Im folgenden werden die dem Simulationsprogramm zugrundeliegenden Modelle für Trägerfluid und Probe der Übersichtlichkeit halber getrennt dargestellt.

**Trägerflüssigkeit** - Die Modellierung der Fließbewegung der inkompressiblen Trägerflüssigkeit erfolgt über eine Massenbilanzierung am jeweiligen Volumenelement. Aufgrund der Querströmung über eine Membran 2 (Fig.2) kommt es zu einer Abnahme des Kanalflusses entlang der Membran 2. Da der Druck p im Trennkanal 1 linear mit der Zeit abnimmt, kann er zu jedem Zeitpunkt t mittels der negativen konstante $C_p$ beschrieben werden.

$$p(t) = p_0 + C_P t \qquad (1)$$

Hierin ist $p_0$ der Druck zu Beginn der Elution. Der Querfluss ist der transmembranen Druckdifferenz $\Delta p_M$ und damit dem aktuellen Druck im Kanal direkt proportional über die Permeabilitätskonstante der Membran 2.

$$\dot{V}_c(t) = P \cdot \Delta p_M(t) \cdot A_M \qquad (2)$$

$A_M$ ist hier die Gesamtfläche der trapezförmigen Kanalunterseite. Damit wird klar, dass der Querfluss, der den Kanal durch die Membran 2 verlässt, ausgehend vom eintretenden Trägerflüssigkeitsstrom $\dot{V}_{c,0}$ in derselben Form wie der Kanaldruck abnehmen muss:

$$\dot{V}_c(t) = \dot{V}_{c,0} + C_P t \, . \qquad (3)$$

Aufgrund der schleichenden Strömungsbedingungen ist der Druckverlust entlang der Membran um Größenordnungen kleiner als der im Kanal herrschende Druck. Daher kann die Querflussdichte an jeder Stelle im Kanal 1 als annähernd konstant angesehen werden und der Querfluss der Zelle i kann aus dem Flächenanteil $A_{M,i}/A_M$ des Segments berechnet werden:

$$\dot{V}_{c,i} = \left( \dot{V}_{c,0} + C_P t_{i-1} \right) \frac{A_{M,i}}{A_M} \, . \qquad (4)$$

Die Membranfläche eines Segments wird über eine rechtwinklige Grundfläche angenähert

$$A_{M,i} = \frac{b(x_i) + b(x_{i+1})}{2} \cdot \Delta x \, , \qquad (5)$$

wobei die Breite b(x) an jedem Punkt x des Trennkanales 1 durch die Trapezform gegeben ist:

$$b(x) = b_0 - \frac{b_0 - b_L}{L} x \, . \qquad (6)$$

Die sich durch den Abzug im Kanal einstellende Querflussgeschwindigkeit $w_0$ der Trägerflüssigkeit direkt an der Membran 2 kann mit Hilfe des abgezogenen Volumenstromes $\dot{V}_c$ und der Membranfläche berechnet werden. Diese Geschwindigkeit ist auf die Membran 2 hin ausgerichtet und daher im hier verwendeten Koordinatensystem negativ. In herkömmlichen AF4-Zellen ist $w_0$ eine konstante Größe. In dem hier vorgeschlagenen Algorithmus ist dies allerdings aufgrund der Druckabnahme ein von der Zeit abhängiger Parameter. Es gilt zu jedem Zeitpunkt t

$$\left|w_o(t)\right| = \frac{\dot{V}_c(t)}{A_M}. \tag{7}$$

Das sich einstellende Profil des Querflusses über der Kanalhöhe h ist aus der Literatur bekannt [Giddings: 1986] und lässt sich an jeder Stelle $z$ beschreiben durch

$$w(z,t) = -\left|w_o(t)\right|\left(1 - \frac{3z^2}{h^2} + \frac{2z^3}{h^3}\right). \tag{8}$$

Der Detektor am Auslass der Zelle erfordert einen konstanten Volumenstrom. Daher ist es notwendig, dass auch der Volumenstrom am Eintritt des Kanales 1 so angepasst wird, dass ein stationärer Detektorfluss trotz abnehmendem Querfluss gewährleistet wird. Deshalb ist der Fluidfluss $\dot{V}_{f,i}$ in jedem Kontrollvolumen i nicht nur orts-, sondern auch zeitabhängig.
Die Massenbilanz für jedes Element reduziert sich aufgrund der Inkompressibilität der Trägerflüssigkeit zu

$$\dot{V}_{f,i}(t) = \dot{V}_{f,i-1}(t) - \dot{V}_{c,i}(t). \tag{9}$$

Daraus ergibt sich die innerhalb einer Zelle als konstant angenommene mittlere Axialgeschwindigkeit $\overline{u}_i\,(t)$ mit der durchströmten Querschnittsfläche $A_{c,i}$.

$$\overline{u}_i(t) = \frac{\dot{V}_{f,i}(t)}{A_{c,i}}. \tag{10}$$

Für das Geschwindigkeitsprofil der lamiaren Strömung gilt bei Kenntnis der Gesamthöhe $h$ an jeder Stelle $z$ im Kanal 1

$$u_i(z) = 6\,\overline{u}_i\,\frac{z}{h}\left(1 - \frac{z}{h}\right). \tag{11}$$

Die mittlere Verweilzeit der Flüssigkeit $t_i^0$ in jedem Element lässt sich aus der mittleren Geschwindigkeit **mittels der Gleichung:**

$$t_i^0 = \frac{x_{i+1} - x_i}{\overline{u}_i}. \tag{12}$$

**oder mittels der Beziehung**

$$t_i^0 = \frac{\Delta x \cdot b_i \cdot h}{\dot{V}_{f,o}(t_i) - \frac{\sum_{k=1}^{i} A_{M,k}}{A_M}\dot{V}_c(t_i)}$$

**berechnen, wobei $\Delta$x die Länge des jeweiligen Elementes des Trennkanales und $\dot{V}_{f,o}(t_i)$ der Längsfluß am Einlass des Trennkanales bedeuten;**

Damit gilt für die gesamte Verweilzeit der Flüssigkeit in der Zelle

$$t^0 = \sum_{i=1}^{N} t_i^0 \, .$$

(13)

Mit Hilfe dieser Bilanz- und Modellgleichungen lässt sich das Verhalten der Strömung des Trägerfluides im Kanal 1 örtlich und zeitlich aufgelöst hinreichend genau wiedergeben.

**Probe -** Ein AF4 Experiment kann in 3 separate Phasen unterteilt werden. Zunächst wird der Trägerflüssigkeitsstrom angehalten, und ein definiertes Probenvolumen $V_{inj}$ wird in der sogenannten Injektionsphase in den Kanal 1 eingebracht. Anschließend wird Trägerfluid in einem festgelegten Volumenstromverhältnis durch den Einlass und den Auslass in den Kanal 1 geleitet, wobei die Flüssigkeit über die Membran 2 wieder abfließt. Während dieser Fokussierungsphase wird die Probe in Richtung der Membran 2 gedrängt, ohne dabei in axialer Richtung bewegt zu werden. Außerdem wird die Probe in einem schmalen Streifen in der Nähe des Injektionspunktes fokussiert. Nach einiger Zeit weist die Probe ein Konzentrationsprofil auf, das im wesentlichen durch das Querflussgeschwindigkeitsprofil (Gl.(8)) bestimmt ist. Die transversale Verteilung sieht so aus, dass es an der Membranoberfläche zu einem Maximum $c_0$ kommt, das exponentiell zum Kanaldeckel hin abnimmt [Wahlund: 1987] :

$$c(z) = c_0 \exp\left[-\frac{z}{l}\left(1 - \frac{3z^2}{h^2} + \frac{2z^3}{h^3}\right)\right].$$

(14)

Hierin steht $l$ für den mittleren Abstand des Schwerpunktes der Probenzone von der Membran. Dieser Abstand kann vereinfacht mit Hilfe des Diffusionskoeffizienten $D$ und der Querflussgeschwindigkeit an der Membran $w_0$ bestimmt werden

$$l(t) = \frac{D}{|w_0(t)|} \, .$$

(15)

Unter der Annahme, dass die Probe in einer Zone der Länge $x_{foc}$ angereichert wird, kann die maximale Probenkonzentration an der Membranoberfläche mittels einer Stoffbilanz bestimmt werden [Wahlund:2005]:

$$c_0 = \frac{c_{inj} \cdot V_{inj}}{x_{foc} \cdot b_{foc}} \cdot \frac{\dot{V}_c \cdot h}{D \cdot V^0} = \frac{c_{inj} \cdot V_{inj}}{x_{foc} \cdot b_{foc} \cdot h \cdot \lambda} \, .$$

(16)

Der Parameter $c_{inj}$ beschreibt die Konzentration der eigentlichen Probe im injizierten Volumen $V_{inj}$. Der Parameter $b_{foc}$ beschreibt die Breite des Kanales am Fokussierungspunkt und $V_0$ steht für das Gesamtvolumen des Kanales 1.

In der dritten Phase wird nach einiger Zeit der Fokussierung der Kanalfluss so eingestellt, dass er ausschließlich vom Einlass zum Auslass des Kanales 1 strömt und damit die Probe transportiert und aufgrund des laminaren Geschwindigkeitsprofils auch letztendlich auftrennt. Während der Elutionsphase befindet sich die Probe ausschließlich in einer sehr schmalen, wandnahen Schicht über der Membran 2. Diese Schicht bezeichnet man auch als Retentionszone. Die Dicke der Retentionszone wird üblicherweise als λ angegeben, welches das Verhältnis zwischen der mittleren Zonendicke $l$ und der Kanalhöhe $h$ beschreibt:

$$\lambda(t) = \frac{l(t)}{h} \, .$$

(17)

Die Retention der eingebrachten Probe wird im allgemeinen durch das Retentionsverhältnis $R$ beschrieben [Moon:1993], das aufgrund des Druckgradienten auch als eine von der Retentionszeit abhängige Größe angesehen werden muss:

$$R(t) = 6\lambda(t)\left[\coth\left(\frac{1}{2\lambda(t)}\right) - 2\lambda(t)\right]. \qquad (18)$$

Damit kann die aktuelle Migrationsgeschwindigkeit $v_{s,i}(t)$ der Probe zu jedem Zeitpunkt und an jeder Stelle im Kanal beschrieben

$$v_{s,i}(t) = R(t) \cdot \overline{u}_i(t) \qquad (19)$$

und letztendlich auch die aktuelle Position der Probe mit der dazugehörigen Verweilzeit gekoppelt werden. Die gesamte Retentionszeit bis zu jeder beliebigen Zelle i beträgt dann

$$t_{r,i} = \sum_{k=1}^{i} \frac{t_k^0}{R_k}, \qquad (20)$$

mit $t^0$ als der lokalen Verweilzeit des Trägerfluids in einer jeden Zelle gemäß Gl. (12).

**Bandenverbreiterung** - Die longitudinale Konzentrationsverteilung weist an jeder Stelle des Kanales 1 eine Gauß-Verteilung auf, wobei die Varianz $\sigma^2$ mit der Lauflänge ständig zunimmt. Üblicherweise wird eine Bandenverbreiterung in chromatographischen Prozessen in Form der Trennstufenhöhe $H$ ausgedrückt. Die Modelle zur Trennstufenhöhe, die von der Feldflussfraktionierung bekannt sind, behalten im asymmetrischen Fall nur lokal für die Trennstufenhöhe $H_i$ ihre Gültigkeit. Diese wird in jedem Kontrollvolumen durch Triebkrafteffekte und durch longitudinale Diffusion beeinflusst [Litzen: 1993] und setzt sich damit aus deren Anteilen zusammen:

$$H = H_{neq} + H_{long}. \qquad (21)$$

Die Triebkrafteffekte, die eine Bandenverbreiterung in symmetrischen Feldflussfraktionierungs-Systemen üblicherweise dominieren, können nur lokal ausgedrückt werden [Giddings:1968], [Martin: 1981]:

$$H_{neq,i} = \frac{\chi_i(\lambda_i) \cdot h^2}{D} \overline{u}_i. \qquad (22)$$

Hier ist $\chi$ eine komplexe Funktion von $\lambda$ [Giddings:1975]:

$$\chi_i(\lambda_i) = \frac{24\lambda_i^3}{1 + e^{-1/\lambda_i} - 2\lambda_i(1 - e^{-1/\lambda_i})} \cdot \left\{ (28\lambda_i^2 + 1)(1 - e^{-1/\lambda_i}) - 10\lambda_i(e^{-1/\lambda_i} + 1) - \frac{1}{3\lambda_i^2} - \frac{2}{\lambda_i} + 4 - \right.$$
$$\left. - \frac{1/\lambda_i}{(1 - e^{-1/\lambda_i})} \cdot \left[ 4\lambda_i\left(1 + \frac{1/\lambda_i}{(1 - e^{-1/\lambda_i})}\right) - \frac{1}{3\lambda_i} - 6\right]\right\} \qquad (23)$$

Damit würde man für die Trennstufenhöhe am Auslass

$$H_{neq} = \frac{L \cdot \sum_{i=1}^{N} \tau_i^2}{t_r^2}. \qquad (24)$$

messen [Litzén:1991], wobei $\tau$ die zeitliche Standardabweichung einer Substanz meint, die nach der Retentionszeit $t_r$ den Kanal 1 verlässt. Für diese Standardabweichung gilt

$$\tau_i^2 = \frac{H_i \, \Delta x}{v_{s,i}} \,. \tag{25}$$

Die longitudinale Diffusion in jedem Element $H_{long,i}$ berechnet sich in rechtwinkligen F3-Zellen durch [Litzén: 1993]:

$$H_{long,i} = \frac{2 \cdot D}{R_i \cdot \overline{u}_i} \,. \tag{26}$$

Der Anteil der Trennstufenhöhe, der durch Diffusion verursacht wurde, beträgt am Auslass

$$H_{long} = \frac{L}{\left(t^0\right)^2} \cdot \sum_{i=1}^{N} \left( \frac{H_{long,i}}{\overline{u}_i} \Delta x \right). \tag{27}$$

**Fraktogramm** - Die Varianz $\sigma^2$ der Gauß-Verteilung wird neben dem Triebkraft- und dem Diffusionsanteil auch noch durch die Breite $x_{foc}$ der Fokussierungszone beeinflusst [Caldwell:1988]:

$$\sigma^2 = \sigma_{neq}^2 + \sigma_{long}^2 + \sigma_{inj}^2 \,. \tag{28}$$

Unter der Annahme, dass sich innerhalb eines Bereiches von $6\sigma$ um den Fokussierungspunkt etwa 99.7% der Probe befinden, kann die Varianz der Injektion wie folgt beschrieben werden:

$$\sigma_{inj}^2 = \left( \frac{x_{foc}}{6} \right)^2 , \tag{29}$$

während die anderen Anteile durch die lokalen Trennstufenhöhen am Ende des Kanales 1 erfasst werden müssen [Litzén: 1993]:

$$\sigma_L^2 = L \cdot H_L \cdot \left( \frac{\overline{u}_L}{u_{av}} \right)^2 . \tag{30}$$

Dabei ist $u_{av}$ mittlere theoretische Geschwindigkeit im Kanal 1 gemäß $L/t^0$. Die zeitliche Standardabweichung am Auslass kann aus der örtlichen berechnet werden:

$$\tau_L^2 = \frac{\sigma_L^2}{v_{s,L}} \,. \tag{31}$$

Damit kann das vollständige Fraktogramm einer jeden Probe mit dem nachfolgend beschriebenen Algorithmus berechnet werden.

**Algorithmus** - Bei der Berechnung der Auftrennung wird nur die Elutionsphase berücksichtigt. Die beiden vorhergehenden, oben beschriebenen Phasen werden als abgeschlossen betrachtet. Das Programm berechnet jetzt Schritt für Schritt auf Basis der eingegebenen Material- und Prozessparameter und unter der Annahme konstanter Verhältnisse während der Verweilzeit in diesem Element die Retentionszeit der Probe in jeder einzelnen Zelle. Es können mindestens zwei verschiedene Substanzen mittels ihres Diffusionskoeffizienten angegeben werden, die jeweils eine separate Berechnung durchlaufen. Dabei werden beim Eintritt der Substanzen in die nächste Zelle alle zeitabhängigen Größen neu berechnet und für die folgende Zelle als feste Größen gesetzt. Zum Zeitpunkt des Übertritts werden die Verhältnisse an jeder Stelle des Kanales 1 aktualisiert. Erreicht die jeweilige in der Probe enthaltene Substanz den Austritt des Kanales 1, so wird die dann erreichte Retentionszeit festgehalten. Gleichzeitig werden beim Durchlauf der einzelnen Kontrollvolumina deren lokale Beiträge zur Trennstufenhöhe der betrachteten Substanz berechnet, sodass am Ende des Durchlaufes das Fraktogramm über die Retentionszeit $t_r$ und $\tau^2$ vollständig für jede betrachtete Substanz separat aufgezeichnet wird.

Dabei ergibt sich aus den Gleichungen 7, 13, 15 und 17-20 für die Retentionszeit:

$$t_r = \sum_{i=1}^{N} \frac{t_i^0}{R_i} = \sum_{i=1}^{N} \frac{t_i^0 \cdot \dot{V}_c(t_i) \cdot h}{6 \cdot D \cdot A_M \left[ \coth\left( \dfrac{\dot{V}_c(t_i) \cdot h}{2 \cdot D \cdot A_M} \right) - \dfrac{2 \cdot D \cdot A_M}{\dot{V}_c(t_i) \cdot h} \right]} \cdot \quad (32)$$

und für die Varianz erhält man aus den Gleichungen 7, 13, 15, 17-19, 21-27 sowie 30 und 31:

$$\tau_L^2 = \frac{L \cdot H_L \cdot \dot{V}_c(t_L) \cdot \left( \dot{V}_{f,0}(t_L) - \dot{V}_c(t_L) \right)}{6 \cdot D \cdot b_L \cdot A_M \left[ \coth\left( \dfrac{\dot{V}_c(t_L) \cdot h}{2 \cdot D \cdot A_M} \right) - \dfrac{2 \cdot D \cdot A_M}{\dot{V}_c(t_L) \cdot h} \right]} \cdot \left( \frac{b_L \cdot h \cdot \sum_{i=1}^{N} t_i^0}{L \cdot \left( \dot{V}_{f,0}(t_L) - \dot{V}_c(t_L) \right)} \right)^2 \quad (33)$$

mit

$$H_L = \frac{L \cdot h^3 \, \Delta x}{6 \cdot D^2 \cdot A_M \cdot t_r^2} \cdot \sum_{i=1}^{N} \frac{\chi_i(\lambda_i) \cdot \dot{V}_c(t_i)}{\left[ \coth\left( \dfrac{\dot{V}_c(t_i) \cdot h}{2 \cdot D \cdot A_M} \right) - \dfrac{2 \cdot D \cdot A_M}{\dot{V}_c(t_i) \cdot h} \right]} +$$

$$+ \frac{2 \cdot L \cdot \Delta x}{6 \cdot h \cdot A_M \cdot \left( \sum_{i=1}^{N} t_i^0 \right)^2} \cdot \sum_{i=1}^{N} \frac{\left( \dot{V}_{f,0}(t_i) - \dfrac{\sum_{k=1}^{i} A_{M,k}}{A_M} \dot{V}_c(t_i) \right)^2}{b_i \cdot \left[ \coth\left( \dfrac{\dot{V}_c(t_i) \cdot h}{2 \cdot D \cdot A_M} \right) - \dfrac{2 \cdot D \cdot A_M}{\dot{V}_c(t_i) \cdot h} \right]}$$

Weitere Einzelheiten und Vorteile der Erfindung ergeben sich aus den folgenden, anhand von Figuren erläuterten Ausführungsbeispielen. Es zeigen:

Fig.1 die Draufsicht auf einen schematisch dargestellten Trennkanal mit sich trapezförmig verjüngenden Seitenwänden;

Fig.2 den Querschnitt eines Teilbereiches des in Fig.1 dargestellten Trennkanales mit einer sich unterseitig daran anschließenden Membran;

Fig.3a-3d gemessene und berechnete Fraktogramme zur Erläuterung des erfindungsgemäßen Verfahrens;

Fig.4 ein Blockschaltbild eines Computers mit Bildschirm zur Durchführung des erfindungsgemäßen Verfahrens;

Fig.5a-5d auf dem Bildschirm des Computers darstellbare Eingabemasken zur Eingabe der für die Berechnung der Fraktogramme benötigten Parametern.

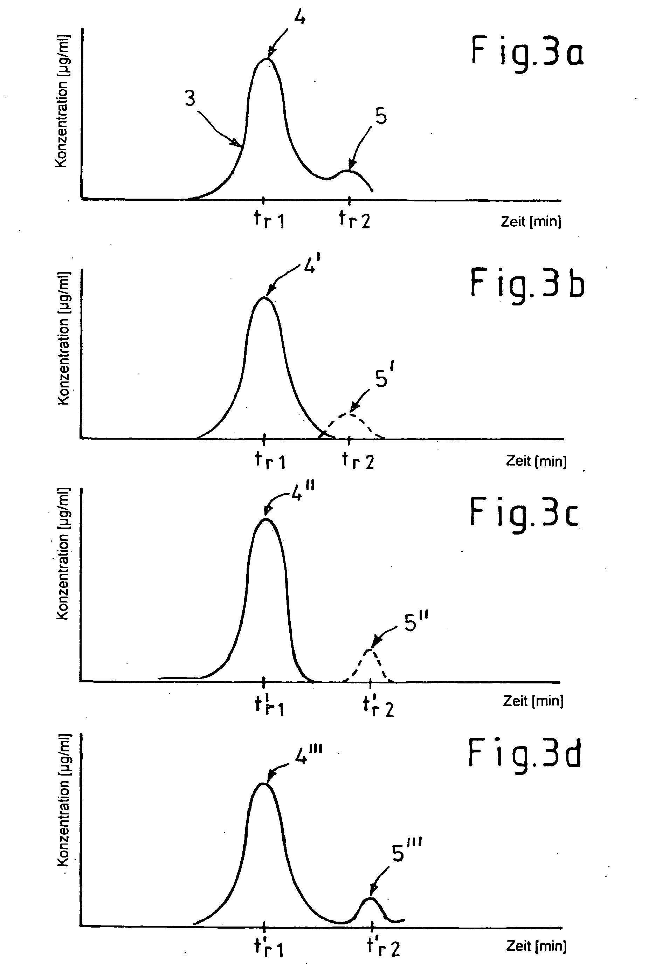

In Fig.3a ist ein mit einem Trennkanal (Fig.1) einer an sich bekannten Meßeinrichtung gemessenes Fraktogramm 3 (Konzentrationsverlauf als Funktion der Retentionszeit) eines neuen Probensystems dargestellt. Das Probensystem umfaßt zwei zu analysierende Probenbestandteile mit unbekannten Diffusionskoeffizienten (und damit auch unbekannten Stokesdurchmessern).

Die Meßeinrichtung kann dabei Bestandteil einer erfindungsgemäßen Vorrichtung sein, mittels welcher das erfindungsgemäße Verfahren ralisiert wird, wobei die beiden, die Probenbestandteile charakterisierenden Peaks 4 und 5 gut getrennt dargestellt werden, ohne daß dieses zu einer wesentlichen Meßzeitvergrößerung führt.

Zunächst werden hierzu die Retentionszeiten $t_r1$ und $t_{r2}$ dem in Fig.3a dargestellten Fraktogramm 3 entnommen.

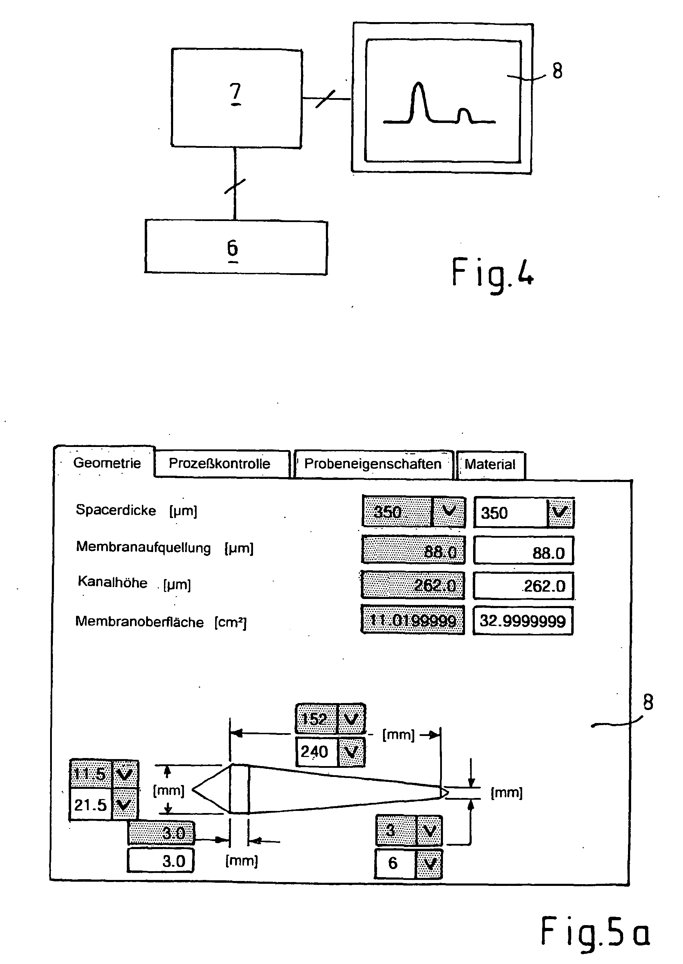

Anschließend werden diese gemessenen Parameter mittels einer Eingabeeinrichtung 6 (beispielsweise einer Tastatur) in einen Computer 7 der erfindungsgemäßen Vorrichtung eingegeben (Fig.4). Nach Eingabe der gemessenen Retentionszeiten $t_{r1}$ und $t_{r2}$ sowie der dieser Messung zugrundeliegenden Geometrieparametern, Prozessparametern und Probeneigenschaften etc. berechnet der Computer 7 mit Hilfe des vorstehend beschriebenen Simulationsprogrammes die den beiden Probenbestandteilen zugeordneten Diffusionskoeffizienten (iterativ in zwei getrennten Durchläufen) sowie die Varianzen $\tau^2$ und stellt auf einem Bildschirm 8 die sich ergebenden (berechneten) Fraktogramme für beide Probenbestandteile dar (Fig.3b). Dabei wird die dargestellte Konzentrationsverteilung aus der Konzentration $c_{inj}$ der aufgegebenen Probenmenge und der berechneten Varianz $\tau_L^2$ gemäß einer Gaußverteilung berechnet mit dem Maximalwert:

$$c_{max} = c_{inj} / (\sqrt{(2\ \pi\ \tau_L^2)}.$$

Die Anzahl der N equidistanten Volumenelemente des trapezförmigen Trennkanals 1 wird für die Berechnungen so groß gewählt, daß eine Erhöhung der Anzahl dieser Volumenelemente praktisch keine Änderung der berechneten Parameter mehr ergibt. In der Praxis hat sich gezeigt, daß $N \leq 100$ gewählt werden kann.

Anschließend wird im Hinblick auf das Optimierungsziel durch Variation der relevanten Parameter versucht, eine entsprechende Trennung der beiden auf dem Bildschirm 8 dargestellten (berechneten) Peaks 4', 5' zu erhalten, wobei beispielsweise die Zeitabhängigkeit des Druckverlaufes des Querflusses variiert und/oder die Höhe h des Trennkanales 1 verändert wird etc. Dabei kann die Variation der Parameter durch manuelle Eingabe der Parameter über die Tastatur erfolgen.

Sobald das Optimierungsziel erreicht ist werden die den beiden Peaks 4" und 5" (Fig.3c) entsprechenden Parameter für die praktischen Messungen bzw. für die Konstruktion eines neuen Trennkanales etc. zur Durchführung der Messungen verwendet.

Wie sich bei zahlreichen Versuchen gezeigt hat, lassen sich die mittels des erfindungsgemäßen Verfahrens ermittelten theoretischen Parameterwerte außerordentlich gut für die weiteren praktisch durchzuführenden Messungen verwenden, so daß eine Optimierung mittels weiterer Testversuche in der Regel entfallen kann (vgl. auch Fig.3d, welche ein gemessenes Fraktogramm mit den Peaks 4'" und 5'" zeigt, bei dem die für die Fig.3c in den Computer eingegebenen Parameter verwendet wurden).

Um die manuelle Eingabe der Parameter zur Berechnung der Fraktogramme möglichst einfach zu gestalten, hat es sich als vorteilhaft erwiesen, den Computerbildschirm zur Anzeige der beispielsweise über eine Tastatur eingegebenen Werte sowie der daraus berechneten Parameter heranzuziehen. Dabei können zur Eingabe der relevanten Parameter mehrere unterschiedliche Bildschirmmasken verwendet werden.

Fig.5a zeigt beispielsweise eine Bildschirmmaske für die Eingabe der geometrischen Parameter des Trennkanales, wobei auf dem Bildschirm 8 auch der Trennkanal selbst abgebildet wird und die entsprechenden eingegebenen und hieraus berechneten Parameter direkt an dem Bild des Trennkanales angezeigt werden.

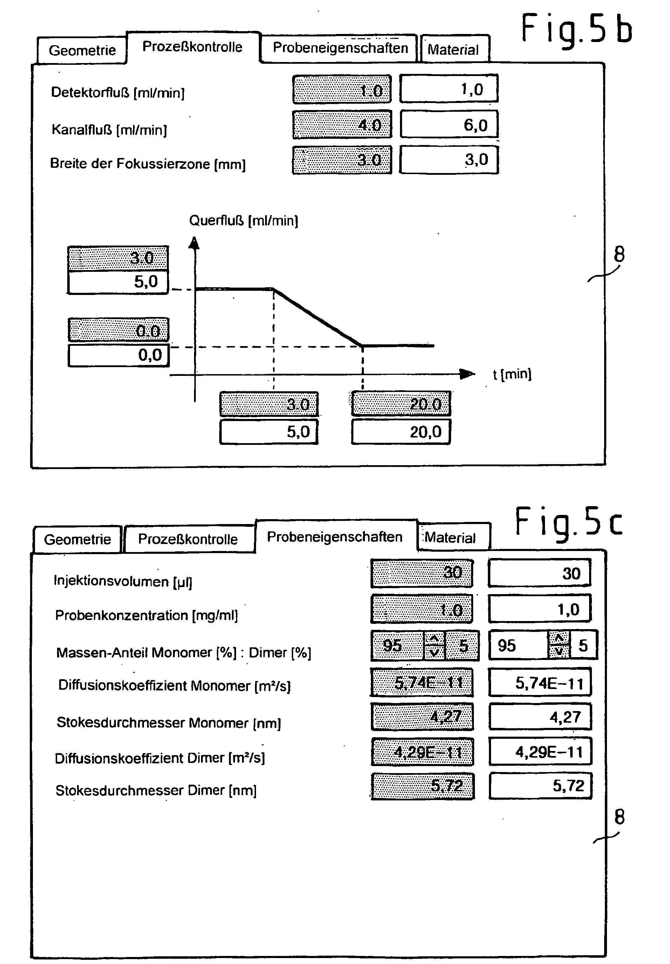

Fig.5b zeigt eine Bildschirmmaske zur Eingabe der Prozessparameter, wobei auf dem Bildschirm der zeitliche Verlauf des Querflusses innerhalb des Trennkanales 1 dargestellt ist.

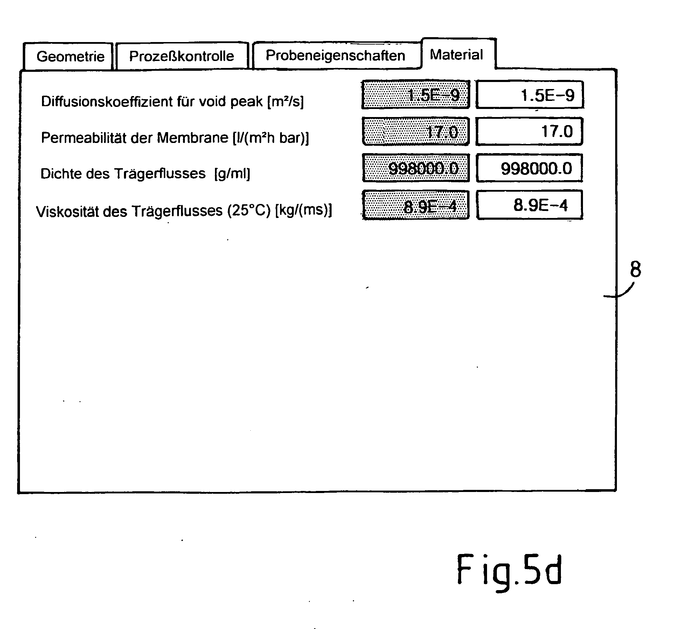

Die Fig.5c und 5d zeigen Bildschirmmasken, bei denen die Parameter für die Probeneigenschaften und ergänzende Materialeigenschaften listenartig auf dem Bildschirm angeordnet sind.

Die Erfindung ist selbstverständlich nicht auf das vorstehend beschriebene Ausführungsbeispiel beschränkt. So können die Seitenwände des Trennkanales 1, je nach Optimierungsziel, auch einen von der Trapezform abweichenden Verlauf aufweisen. Ferner können mit dem erfindungsgemäßen Verfahren auch Probensysteme mit mehr als zwei zu analysierenden Probenbestandteilen analysiert werden, wobei für jeden Probenbestandteil ein separater Rechnerdurchlauf erfolgt.

**Bezugszeichenliste**

1    Kanal, Trennkanal
2    Membran
3    Fraktogramm
4-4'''   Peaks
5-5 '''   Peaks
6    Eingabeeinrichtung
7    Computer
8    Bildschirm

**Patentansprüche**

**1.** Verfahren zur Optimierung der Trennmethode für ein gegebenes Probensystem mit mindestens einem zu analysierenden Probenbestandteil mittels asymmetrischer Feldflussfraktionierung (AF4), wobei das Auftrennen des Probensystems mit Hilfe eines Trennkanales (1) erfolgt, der einen sich in Richtung der Längsachse des Kanales zum Flussauslass hin erstreckenden verjüngenden Verlauf aufweist und der zur Erzeugung einer Querkraft auf seiner Unterseite eine Membran (2) besitzt, durch die ein zu einem Trägerfluss senkrechter Querfluss geleitet wird, und wobei die Membran (2) eine von der Kanalform abhängige Membranfläche aufweist, mit den Merkmalen:

a) von dem Probensystem wird mit Hilfe eines Trennkanales (1) ein Fraktogramm gemessen und aus diesem die Retentionszeit $t_r$ des für den zu analysierenden Probenbestandteil charakteristischen Konzentrationspeaks ermittelt;
b) aus der experimentell ermittelten Retentionszeit $t_r$, und den geometrischen Parametern des für diese Messung verwendeten Trennkanales (1) sowie der für die Messung gewählten Prozessparametem wird mittels eines Computers (7) aus der Gleichung

$$t_r = \sum_{i=1}^{N} \frac{t_i^0}{R_i} = \sum_{i=1}^{N} \frac{t_i^0 \cdot \dot{V}_c(t_i) \cdot h}{6 \cdot D \cdot A_M \left[ \coth\left( \frac{\dot{V}_c(t_i) \cdot h}{2 \cdot D \cdot A_M} \right) - \frac{2 \cdot D \cdot A_M}{\dot{V}_c(t_i) \cdot h} \right]} \qquad (1)$$

der Diffusionskoeffizient D mittels eines iterativen Verfahrens bestimmt, wobei hierzu der sich verjüngende Trennkanal (1) durch N equidistante rechtwinklige Volumenelemente mit der Verjüngung des Trennkanales entsprechender Breite $b_i$ (i = 1...N) angenähert wird; und wobei
h die Trennkanalhöhe,
$A_M$ die kanalformabhängige Kanalfläche,
$\dot{V}_c(ti)$ den Volumenstrom im i'ten Volumenelement des Trennkanales
$R_i$ das Retentionsverhältnis im i'ten Volumenelement und
$t_i^0$ die mittlere Verweilzeit der Flüssigkeit in dem i'ten Volumenelement des Trennkanales bedeuten, wobei $t_i^0$ mit Hilfe der Beziehung

$$t_i^0 = \frac{\Delta x \cdot b_i \cdot h}{\dot{V}_{f,0}(t_i) - \frac{\sum_{k=1}^{i} A_{M,k}}{A_M} \dot{V}_c(t_i)}$$

bestimmt wird, wobei $\Delta$x die Länge des jeweiligen Elementes des Trennkanales und $\dot{V}_{f,0}(t_i)$ der **Längsfluß** am

Einlass des Trennkanales bedeuten;

c) anschließend wird auf einem mit dem Computer (7) verbunden Bildschirm (8) ein dem gemessenen Fraktogramm (3) entsprechendes Fraktogramm dargestellt, wobei der für den Probenbestandteil charakteristische Konzentrationspeak eine Gauß-Verteilung aufweist, deren Maximalwert bei der vorher gemessenen Retentionszeit $t_r$ liegt und wobei die Varianz $\tau^2$ aus der folgenden Beziehung mit dem Computer (7) berechnet wird:

$$\tau_L^2 = \frac{L \cdot H_L \cdot \dot{V}_c(t_L) \cdot \left(\dot{V}_{f,0}(t_L) - \dot{V}_c(t_L)\right)}{6 \cdot D \cdot b_L \cdot A_M \left[\coth\left(\frac{\dot{V}_c(t_L) \cdot h}{2 \cdot D \cdot A_M}\right) - \frac{2 \cdot D \cdot A_M}{\dot{V}_c(t_L) \cdot h}\right]} \cdot \left(\frac{b_L \cdot h \cdot \sum_{i=1}^{N} t_i^0}{L \cdot \left(\dot{V}_{f,0}(t_L) - \dot{V}_c(t_L)\right)}\right)^2 \qquad (2)$$

und wobei $H_L$ die Trennstufenhöhe bedeutet und mittels der Beziehung:

$$H_L = \frac{L \cdot h^3}{6 \cdot D^2 \cdot A_M \cdot t_r^2} \frac{\Delta x}{} \cdot \sum_{i=1}^{N} \frac{\chi_i(\lambda_i) \cdot \dot{V}_c(t_i)}{\left[\coth\left(\frac{\dot{V}_c(t_i) \cdot h}{2 \cdot D \cdot A_M}\right) - \frac{2 \cdot D \cdot A_M}{\dot{V}_c(t_i) \cdot h}\right]} +$$

$$+ \frac{2 \cdot L \cdot \Delta x}{6 \cdot h \cdot A_M \cdot \left(\sum_{i=1}^{N} t_i^0\right)^2} \cdot \sum_{i=1}^{N} \frac{\left(\dot{V}_{f,0}(t_i) - \frac{\sum_{k=1}^{i} A_{M,k}}{A_M} \dot{V}_c(t_i)\right)^2}{b_i \cdot \left[\coth\left(\frac{\dot{V}_c(t_i) \cdot h}{2 \cdot D \cdot A_M}\right) - \frac{2 \cdot D \cdot A_M}{\dot{V}_c(t_i) \cdot h}\right]}$$

ermittelt wird (mit L = die Länge des Trennkanales und

$$\chi_i(\lambda_i) = \frac{24 \lambda_i^3}{1 + e^{-1/\lambda_i} - 2\lambda_i\left(1 - e^{-1/\lambda_i}\right)} \cdot \left\{\left(28\lambda_i^2 + 1\right)\left(1 - e^{-1/\lambda_i}\right) - 10\lambda_i\left(e^{-1/\lambda_i} + 1\right) - \frac{1}{3\lambda_i^2} - \frac{2}{\lambda_i} + 4 - \right.$$

$$\left. - \frac{1/\lambda_i}{\left(1 - e^{-1/\lambda_i}\right)} \cdot \left[4\lambda_i\left(1 + \frac{1/\lambda_i}{\left(1 - e^{-1/\lambda_i}\right)}\right) - \frac{1}{3\lambda_i} - 6\right]\right\},$$

wobei $\lambda_i$ die Dicke der Retentionszone in dem i'ten Volumenelement des Trennkanales bedeutet);

d) im Hinblick auf ein vorgegebenes Optimierungsziel werden die in die Gleichungen (1) und (2) eingehenden Geometrieparameter des Trennkanales und/oder die für die Durchführung der Messungen benötigten Prozessparameter so lange variiert, bis auf dem Bildschirm (8) des Computers (7) ein optimales Trennergebnis dargestellt wird;

e) anschließend werden dann die bei Erreichen des Optimierungszieles durch die Computersimulation gewonnenen geometrischen Parameter und/oder Prozessparameter für die tatsächlich durchzuführenden Analysemessungen von entsprechenden Proben übernommen.

2. Verfahren nach Anspruch 1, **dadurch gekennzeichnet, daß** das Probensystem ein Stoffgemisch aus mindestens zwei zu analysierenden Probenbestandteilen mit unterschiedlicher Diffusionskoeffizienten aufweist und daß für jeden Probenbestandteil mit den gleichen geometrischen Parametern und Prozessparameter eine Berechnung und Darstellung der Retentionszeiten und der Varianzen erfolgt.

3. Verfahren nach Anspruch 1 oder 2, **dadurch gekennzeichnet, daß** als Trennkanal (1) ein sich trapezförmig verjüngender Kanal verwendet wird.

4. Verfahren nach einem der Ansprüche 1 bis 3, **dadurch gekennzeichnet, daß** der Querfluss $V_c(t)$ derart gewählt wird, daß er innerhalb eines vorgebbaren Zeitabschnittes linear abnimmt.

5. Verfahren nach einem der Ansprüche 1 bis 4, **dadurch gekennzeichnet, daß** das Optimierungsziel darin besteht, die geometrischen Abmessungen des Trennkanales zu optimieren.

6. Verfahren nach einem der Ansprüche 1 bis 5, **dadurch gekennzeichnet, daß** das Optimierungsziel darin besteht, die Prozessparameter, wie Injektionszeit und Fokussierzeit des Probensystems sowie den die Querkraft bestimmenden Querfluss in dem Trennkanal zu optimieren.

7. Verfahren nach einem der Ansprüche 1 bis 6, **dadurch gekennzeichnet, daß** der Bildschirm zur Eingabe und/oder Darstellung der geometrischen Parameter und/oder Prozessparameter verwendet wird.

8. Vorrichtung zur Durchführung des Verfahrens nach einem der Ansprüche 1 bis 7 mit den Merkmalen:

   a) die Vorrichtung umfaßt einen Computer (7) mit einer Eingabeeinrichtung (6) und einem Bildschirm (8),
   b) der Computer (7) ist derart ausgelegt, daß er nach Eingabe einer experimentell ermittelten Retentionszeit $t_r$, und den geometrischen Parametern des für die Messung der Retentionszeit $t_r$ verwendeten Trennkanales (1) sowie der für die Messung gewählten Prozessparametern aus der Gl. (1) den Diffusionskoeffizient D bestimmt und
   c) anschließend auf dem mit dem Computer (7) verbunden Bildschirm (8) ein dem gemessenen Fraktogramm (3) entsprechendes Fraktogramm darstellt, wobei der für den Probenbestandteil charakteristische Konzentrationspeak eine Gauß-Verteilung aufweist, deren Maximalwert bei der vorher gemessenen Retentionszeit $t_r$ liegt und wobei der Computer (7) die Varianz $\tau^2$ der Gauß-Verteilung aus der Gl. (2) berechnet.

9. Vorrichtung nach Anspruch 8, **dadurch gekennzeichnet, daß** die Vorrichtung eine Meßeinrichtung mit Trennkanal zur Bestimmung der Retentionszeiten der zu analysierender Probenbestandteile umfaßt.

10. Vorrichtung nach Anspruch 8 oder 9, **dadurch gekennzeichnet, daß** der Computer (7) und der Bildschirm (8) des Computers (7) derart miteinander in Wirkverbindung stehen, daß der Bildschirm (8) außer zur Darstellung der Fraktogramme auch zur Anzeige der über die Eingabeeinrichtung (6) in den Computer (7) eingegebenen Werte (wie geometrischen Parametern und Prozeßparametern) sowie der daraus berechneten Parametern dient.

**Claims**

1. Method for optimizing the separation method for a given sample system with at least one sample constituent to be analysed by means of asymmetrical field-flow fractionation (AF4), the separation of the sample system being performed with the aid of a separation channel (1) which has a profile tapering and extending in the direction of the longitudinal axis of the channel towards the flow outlet and which, for the purpose of generating a transverse force, has on its underside a membrane (2) through which a transverse flow perpendicular to a carrier flow is guided, and the membrane (2) having a membrane area dependent on the channel shape, having the following features:

   a) a separation channel (1) is used to measure from the sample system a fractogram from which the retention time $t_r$ of the concentration peak characteristic of the sample constituent to be analysed is determined;
   b) an iterative method is used to determine the diffusion coefficient D from the experimentally determined retention time $t_r$, and the geometrical parameters of the separation channel (1) used for this measurement, as well as from the process parameters selected for the measurement, this being done by means of a computer (7) from the equation

$$t_r = \sum_{i=1}^{N} \frac{t_i^0}{R_i} = \sum_{i=1}^{N} \frac{t_i^0 \cdot \dot{V}_c(t_i) \cdot h}{6 \cdot D \cdot A_M \left[ \coth\left(\dfrac{\dot{V}_c(t_i) \cdot h}{2 \cdot D \cdot A_M}\right) - \dfrac{2 \cdot D \cdot A_M}{\dot{V}_c(t_i) \cdot h} \right]} \qquad (1)$$

the tapering separation channel (1) being approximated to this end by N equidistant rectangular volume elements of width $b_i$ (i = 1...N) corresponding to the tapering of the separation channel; and

h being the separation channel height,

$A_M$ being the channel area, which depends on the channel shape,

$\dot{V}_c(ti)$ the volumetric flow in the ith volume element of the separation channel,

$R_i$ denoting the retention ratio in the ith volume element, and

$t_i^0$ denoting the mean dwell time of the liquid in the ith volume element of the separation channel, $t_i^0$ being determined with the aid of the relationship

$$t_i^0 = \frac{\Delta x \cdot b_i \cdot h}{\dot{V}_{r,0}(t_i) - \dfrac{\sum_{k=1}^{i} A_{M,k}}{A_M} \dot{V}_c(t_i)}$$

$\Delta X$ denoting the length of the respective element of the separation channel, and $V_{r,0}(t_i)$ denoting the longitudinal flow at the inlet to the separation channel;

c) subsequently, a fractogram corresponding to the measured fractogram (3) is displayed on a screen (8) connected to the computer (7), the concentration peak characteristic of the sample constituent having a Gaussian distribution whose maximum value lies at the previously measured retention time $t_r$, and the variance $\tau^2$ being calculated from the following relationship with the aid of the computer (7):

$$\tau_L^2 = \frac{L \cdot H_L \cdot \dot{V}_c(t_L) \cdot \left(\dot{V}_{f,0}(t_L) - \dot{V}_c(t_L)\right)}{6 \cdot D \cdot b_L \cdot A_M \left[ \coth\left(\dfrac{\dot{V}_c(t_L) \cdot h}{2 \cdot D \cdot A_M}\right) - \dfrac{2 \cdot D \cdot A_M}{\dot{V}_c(t_L) \cdot h} \right]} \cdot \left( \frac{b_L \cdot h \cdot \sum_{l=1}^{N} t_l^0}{L \cdot \left(\dot{V}_{f,0}(t_L) - \dot{V}_c(t_L)\right)} \right)^2 \qquad (2)$$

and $H_L$ denoting the separation stage height and being determined with the aid of the relationship:

$$H_{,L} = \frac{L \cdot h^3}{6 \cdot D^2 \cdot A_M} \cdot \frac{\Delta x}{t_r^2} \cdot \sum_{i=1}^{N} \frac{\chi_i(\lambda_i) \cdot \dot{V}_c(t_i)}{\left[ \coth\left( \frac{\dot{V}_c(t_i) \cdot h}{2 \cdot D \cdot A_M} \right) - \frac{2 \cdot D \cdot A_M}{\dot{V}_c(t_i) \cdot h} \right]} +$$

$$+ \frac{2 \cdot L \cdot \Delta x}{6 \cdot h \cdot A_M \cdot \left( \sum_{i=1}^{N} t_i^0 \right)^2} \cdot \sum_{i=1}^{N} \frac{\left( \dot{V}_{f,0}(t_i) - \frac{\sum_{k=1}^{i} A_{M,k}}{A_M} \dot{V}_c(t_i) \right)^2}{D_i \cdot \left[ \coth\left( \frac{\dot{V}_c(t_i) \cdot h}{2 \cdot D \cdot A_M} \right) - \frac{2 \cdot D \cdot A_M}{\dot{V}_c(t_i) \cdot h} \right]}$$

where L = the length of the separation channel and

$$\chi_i(\lambda_i) = \frac{24 \lambda_i^3}{1 + e^{-1/\lambda_i} - 2\lambda_i(1 - e^{-1/\lambda_i})} \cdot \left\{ \left(28\lambda_i^2 + 1\right)\left(1 - e^{-1/\lambda_i}\right) - 10\lambda_i\left(e^{-1/\lambda_i} + 1\right) - \frac{1}{3\lambda_i^2} - \frac{2}{\lambda_i} + 4 - \right.$$

$$\left. - \frac{1/\lambda_i}{\left(1 - e^{-1/\lambda_i}\right)} \cdot \left[ 4\lambda_i\left(1 + \frac{1/\lambda_i}{\left(1 - e^{-1/\lambda_i}\right)}\right) - \frac{1}{3\lambda_i} - 6 \right] \right\},$$

$\lambda_i$ denoting the thickness of the retention zone in the ith volume element of the separation channel;

d) with regard to a prescribed optimization goal, the geometrical parameters of the separation channel which feature in equations (1) and (2), and/or the process parameters required for carrying out measurements are varied until an optimum separation result is displayed on the screen (8) of the computer (7);

e) subsequently, the geometrical parameters and/or process parameters obtained once the optimization goal is reached by the computer simulation are then adopted for the analysis measurements actually to be carried out on appropriate samples.

2. Method according to Claim 1, **characterized in that** the sample system has a substance mixture of at least two sample constituents which are to be analysed and have different diffusion coefficients, and **in that** the retention times and the variances are calculated and displayed for each sample constituent with the same geometrical parameters and process parameters.

3. Method according to Claim 1 or 2, **characterized in that** a trapezoidally tapering channel is used as separation channel (1).

4. Method according to one of Claims 1 to 3,
**characterized in that** the transverse flow $V_c(t)$ is selected in such a way that it decreases linearly within a prescribable time interval.

5. Method according to one of Claims 1 to 4,
**characterized in that** the optimization goal consists in optimizing the geometrical dimensions of the separation channel.

6. Method according to one of Claims 1 to 5,
**characterized in that** the optimization goal consists in optimizing the process parameters such as injection time and focusing time of the sample system, and in optimizing the transverse flow, determining the transverse force, in the separation channel.

7. Method according to one of Claims 1 to 6,
**characterized in that** the screen is used to input and/or display the geometrical parameters and/or process parameters.

**8.** Device for carrying out the method according to one of Claims 1 to 7, having the following features:

a) the device comprises a computer (7) with an input device (6) and screen (8),
b) the computer (7) is designed in such a way that it determines the diffusion coefficient D from equation (1) after the inputting of an experimentally determined retention time $t_r$, and of the geometrical parameters of the separation channel (1) used for measuring the retention time $t_r$, as well as of the process parameters selected for the measurement, and
c) subsequently, a fractogram corresponding to the measured fractogram (3) is displayed on the screen (8) connected to the computer (7), the concentration peak characteristic of the sample constituent having a Gaussian distribution whose maximum value lies at the previously measured retention time $t_r$, and the computer (7) calculating the variance $\tau^2$ of the Gaussian distribution from equation (2).

**9.** Device according to Claim 8, **characterized in that** the device comprises a measuring device with separation channel for determining the retention times of the sample constituents to be analysed.

**10.** Device according to Claim 8 or 9, **characterized in that** the computer (7) and the screen (8) of the computer (7) are operationally connected to one another in such a way that apart from serving to display the fractograms, the screen (8) also serves to display the values (such as geometrical parameters and process parameters) input into the computer (7) via the input device (6), as well as to display the parameters calculated therefrom.

**Revendications**

**1.** Procédé d'optimisation du procédé de séparation d'un système d'échantillon donné présentant au moins un constituant d'échantillon à analyser au moyen d'un fractionnement par couplage flux-force asymétrique (AF4), où la séparation du système d'échantillon est réalisée à l'aide d'un canal de séparation (1) présentant une allure qui se rétrécit dans le sens de l'axe longitudinal du canal vers la sortie du flux et présentant, pour produire une force transversale, sur sa face inférieure, une membrane (2) au travers de laquelle est guidé un flux transversal perpendiculaire à un flux support et où la membrane (2) présente une surface de membrane dépendant de la forme du canal, présentant les caractéristiques suivantes :

a) à l'aide d'un canal de séparation (1), on détermine un fractogramme du système d'échantillon et on détermine, à partir de celui-ci, le temps de rétention $t_r$ du pic de concentration caractéristique du constituant d'échantillon à analyser ;
b) à partir du temps de rétention déterminé expérimentalement $t_r$ et des paramètres géométriques du canal de séparation (1) utilisé pour cette mesure ainsi que des paramètres de procédé choisis pour la mesure, on détermine, au moyen d'un ordinateur (7), à partir de l'équation

$$ t_r = \sum_{i=1}^{N} \frac{t_i^0}{R_i} = \sum_{i=1}^{N} \frac{t_i^0 \cdot \dot{V_c}(t_i) \cdot h}{6 \cdot D \cdot A_M \left[ \coth\left( \frac{\dot{V_c}(t_i) \cdot h}{2 \cdot D \cdot A_M} \right) - \frac{2 \cdot D \cdot A_M}{\dot{V_c}(t_i) \cdot h} \right]} \qquad (1) $$

le coefficient de diffusion D par un procédé par itération, où on approche, à cette fin, le canal de séparation (1) qui se rétrécit par N éléments volumiques équidistants, rectangulaires présentant la largeur $b_i$ (i = 1 ...N) correspondant au rétrécissement
du canal de séparation ; et où
h signifie la hauteur du canal de séparation,
$A_M$ signifie la surface du canal dépendant de la forme du canal,
$V_c(t_i)$ signifie le flux volumique dans le ième élément volumique du canal de séparation,
$R_i$ signifie le rapport de rétention dans le ième élément volumique et
$t_i^0$ signifie le temps de séjour moyen du liquide dans le ième élément volumique du canal de séparation, où $t_i^0$ est déterminé à l'aide de l'équation

$$t_i^0 = \frac{\Delta x \cdot b_i \cdot h}{\dot{V}_{f,0}(t_i) - \dfrac{\displaystyle\sum_{k=1}^{i} A_{M,k}}{A_M} \dot{V}_c(t_i)}$$

où $\Delta x$ signifie la longueur de chaque élément du canal de séparation et $V_{f,0}(t_i)$ signifie le flux longitudinal à l'entrée du canal de séparation ;

c) ensuite, on représente sur un écran (8) relié à l'ordinateur (7) un fractogramme correspondant au fractogramme mesuré (3), où le pic de concentration caractéristique pour le constituant d'échantillon présente une répartition de Gauss, dont la valeur maximale se situe au temps de rétention $t_r$ mesuré au préalable et où la variance $\tau^2$ est calculée par l'ordinateur (7) à partir de l'équation suivante :

$$\tau_L^2 = \frac{L \cdot H_L \cdot \dot{V}_c(t_L) \cdot \left(\dot{V}_{f,0}(t_L) - \dot{V}_c(t_L)\right)}{6 \cdot D \cdot b_L \cdot A_M \left[\coth\left(\dfrac{\dot{V}_c(t_L) \cdot h}{2 \cdot D \cdot A_M}\right) - \dfrac{2 \cdot D \cdot A_M}{\dot{V}_c(t_L) \cdot h}\right]} \cdot \left(\frac{b_L \cdot h \cdot \displaystyle\sum_{i=1}^{N} t_i^0}{L \cdot \left(\dot{V}_{f,0}(t_L) - \dot{V}_c(t_L)\right)}\right)^2 \qquad (2)$$

et où $H_L$ signifie la hauteur de l'étage de séparation et est déterminé au moyen de l'équation :

$$H_L = \frac{L \cdot h^3 \, \Delta x}{6 \cdot D^2 \cdot A_M \cdot t_r^2} \cdot \sum_{i=1}^{N} \frac{\chi_i(\lambda_i) \cdot \dot{V}_c(t_i)}{\left[\coth\left(\dfrac{\dot{V}_c(t_i) \cdot h}{2 \cdot D \cdot A_M}\right) - \dfrac{2 \cdot D \cdot A_M}{\dot{V}_c(t_i) \cdot h}\right]} +$$

$$+ \frac{2 \cdot L \cdot \Delta x}{6 \cdot h \cdot A_M \cdot \left(\displaystyle\sum_{i=1}^{N} t_i^0\right)^2} \cdot \sum_{i=1}^{N} \frac{\left(\dot{V}_{f,0}(t_i) - \dfrac{\displaystyle\sum_{k=1}^{i} A_{M,k}}{A_M} \dot{V}_c(t_i)\right)^2}{b_i \cdot \left[\coth\left(\dfrac{\dot{V}_c(t_i) \cdot h}{2 \cdot D \cdot A_M}\right) - \dfrac{2 \cdot D \cdot A_M}{\dot{V}_c(t_i) \cdot h}\right]}$$

(avec L = la longueur du canal de séparation et

$$\chi_i(\lambda_i) = \frac{24\lambda_i^3}{1 + e^{-1/\lambda_i} - 2\lambda_i\left(1 - e^{-1/\lambda_i}\right)} \cdot \left\{\left(28\lambda_i^2 + 1\right)\left(1 - e^{-1/\lambda_i}\right) - 10\lambda_i\left(e^{-1/\lambda_i} + 1\right) - \frac{1}{3\lambda_i^2} - \frac{2}{\lambda_i} + 4 - \right.$$

$$\left. - \frac{1/\lambda_i}{\left(1 - e^{-1/\lambda_i}\right)} \cdot \left[4\lambda_i\left(1 + \frac{1/\lambda_i}{\left(1 - e^{-1/\lambda_i}\right)}\right) - \frac{1}{3\lambda_i} - 6\right]\right\},$$

où $\lambda_i$ signifie l'épaisseur de la zone de rétention dans le ième élément volumique du canal de séparation) ;

d) en fonction d'un but d'optimisation prédéfini, les paramètres de géométrie du canal de séparation et/ou les paramètres de procédé nécessaires pour la réalisation des mesures entrant dans les équations (1) et (2) sont variés jusqu'à ce qu'un résultat de séparation optimal est représenté sur l'écran (8) de l'ordinateur (7) ;

e) ensuite, les paramètres géométriques et/ou les paramètres de procédé obtenus par la simulation informatique lorsque le but d'optimisation est atteint sont repris pour les mesures d'analyse des échantillons correspondants à réaliser effectivement.

**2.** Procédé selon la revendication 1, **caractérisé en ce que** le système d'échantillon présente un mélange de substances constitué par au moins deux constituants d'échantillon à analyser présentant des coefficients de diffusion différents et **en ce que**, pour chaque constituant d'échantillon, on réalise un calcul et une représentation des temps de rétention et des variances avec les mêmes paramètres géométriques et paramètres de procédé.

**3.** Procédé selon la revendication 1 ou 2,
**caractérisé en ce qu'**on utilise comme canal de séparation (1) un canal se rétrécissant en forme de trapèze.

**4.** Procédé selon l'une quelconque des revendications 1 à 3, **caractérisé en ce que** le flux transversal $V_c(t)$ est choisi de manière telle qu'il diminue linéairement dans un laps de temps pouvant être prédéfini.

**5.** Procédé selon l'une quelconque des revendications 1 à 4, **caractérisé en ce que** le but d'optimisation réside dans l'optimisation des dimensions géométriques du canal de séparation.

**6.** Procédé selon l'une quelconque des revendications 1 à 5, **caractérisé en ce que** le but d'optimisation réside dans l'optimisation des paramètres de procédé, tels que le temps d'injection et le temps de focalisation du système d'échantillon ainsi que du flux transversal déterminant la force transversale dans le canal de séparation.

**7.** Procédé selon l'une quelconque des revendications 1 à 6, **caractérisé en ce que** l'écran est utilisé pour introduire et/ou représenter les paramètres géométriques et/ou les paramètres de procédé.

**8.** Dispositif pour la réalisation du procédé selon l'une quelconque des revendications 1 à 7 présentant les caractéristiques :

a) le dispositif comprend un ordinateur (7) avec un dispositif de saisie (6) et un écran (8),
b) l'ordinateur (7) est conçu de manière telle qu'il détermine, après la saisie d'un temps de réaction $t_r$ déterminé expérimentalement et des paramètres géométriques du canal de séparation (1) utilisé pour la mesure du temps de rétention $t_r$ ainsi que des paramètres de procédé choisis pour la mesure, à partir de l'équation (1) le coefficient de diffusion D et
c) ensuite, on représente sur un écran (8) relié à l'ordinateur (7) un fractogramme correspondant au fractogramme mesuré (3), où le pic de concentration caractéristique pour le constituant d'échantillon présente une répartition de Gauss, dont la valeur maximale se situe au temps de rétention $t_r$ mesuré au préalable et où l'ordinateur (7) calcule la variance $\tau^2$ de la répartition de Gauss à partir de l'équation (2).

**9.** Dispositif selon la revendication 8,
**caractérisé en ce que** le dispositif comprend un dispositif de mesure avec un canal de séparation pour la détermination des temps de rétention des constituants d'échantillon à analyser.

**10.** Dispositif selon la revendication 8 ou 9,
**caractérisé en ce que** l'ordinateur (7) et l'écran (8) de l'ordinateur (7) interagissent l'un avec l'autre de manière telle que l'écran (8) sert, outre à représenter le fractogramme, également à indiquer les valeurs saisies via le dispositif de saisie (6) dans l'ordinateur (7) (telles que les paramètres géométriques et les paramètres de procédé) ainsi que les paramètres calculés à partir de celles-ci.

Fig.1

Fig.2

Fig.3a

Fig.3b

Fig.3c

Fig.3d

Fig.4

| Geometrie | Prozeßkontrolle | Probeneigenschaften | Material |

Spacerdicke [µm]  350  350

Membranaufquellung [µm]  88.0  88.0

Kanalhöhe [µm]  262.0  262.0

Membranoberfläche [cm²]  11.0199999  32.9999999

8

Fig.5a

22

Fig.5b

| Geometrie | Prozeßkontrolle | Probeneigenschaften | Material |

Detektorfluß [ml/min]    1,0    1,0

Kanalfluß [ml/min]    4,0    6,0

Breite der Fokussierzone [mm]    3,0    3,0

Querfluß [ml/min]

3,0
5,0

0,0
0,0

t [min]

3,0
5,0

20,0
20,0

8

Fig.5c

| Geometrie | Prozeßkontrolle | Probeneigenschaften | Material |

Injektionsvolumen [µl]    30    30

Probenkonzentration [mg/ml]    1,0    1,0

Massen-Anteil Monomer [%] : Dimer [%]    95   5    95   5

Diffusionskoeffizient Monomer [m²/s]    5,74E−11    5,74E−11

Stokesdurchmesser Monomer [nm]    4,27    4,27

Diffusionskoeffizient Dimer [m²/s]    4,29E−11    4,29E−11

Stokesdurchmesser Dimer [nm]    5,72    5,72

8

| Geometrie | Prozeßkontrolle | Probeneigenschaften | Material |

Diffusionskoeffizient für void peak [m²/s]     `1.5E-9`    `1.5E-9`

Permeabilität der Membrane [l/(m²h bar)]     `17.0`    `17.0`

Dichte des Trägerflusses [g/ml]     `998000.0`    `998000.0`

Viskosität des Trägerflusses (25°C) [kg/(ms)]     `8.9E-4`    `8.9E-4`

8

# Fig.5d

# EP 2 104 853 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- **Kirkland, J.J.** Asymmetric-channel flow field-flow fractionation with exponential force-field programming. *Journal of Chromatography,* 1992, vol. 593, 339-355
- **Caldwell, K.D. et al.** *J.Appl.Polym.Sci.,* 1988, vol. 36, 703
- **Giddings, J.C.** *J.Chem.Phys.,* 1968, vol. 49, 81
- **Giddings, J.C. et al.** *E.Sep.Sci.,* 1975, vol. 10, 447
- **Giddings, J.C.** *Sep.Sci.Technol.,* 1986, vol. 21, 831
- **Litzen, A. ; Wahlund, K.G.** *Anal.Chem.,* 1991, vol. 63, 1001
- **Litzen, A.** *Anal.Chem.,* 1993, vol. 65, 461
- **Martin, M. ; Giddings, J.C.** *J.Phys.Chem.,* 1981, vol. 85, 727
- **Moon, M.H ; Giddings, J.C.** *J.Pharm. Biomed. Anal.,* 1993, vol. 11, 911
- **Wahlund, K.G. ; Giddings, J.C.** *Anal. Chem.,* 1987, vol. 59, 1332
- **Wahlund, K.G.** *Information,* 2005